# EUROPEAN PATENT APPLICATION

(11) **EP 4 819 345 A1**
(43) Date of publication of application: **07.10.2026**
(21) Application number: 26166723.2
(22) Date of filing: 23.03.2026
(51) Int. Cl.: H01M 50/342, H01M 16/00, H01M 50/103, H01M 50/124, H01M 50/209, H01M 50/383

(54) **SECONDARY BATTERY AND SECONDARY BATTERY PACK INCLUDING SAME**

(30) Priority: 31.03.2025 KR 20250041480
(71) Applicant: SAMSUNG SDI CO., LTD., Yongin-si, Gyeonggi-do 17084 (KR)
(72) Inventor: Lee, Hyeonkyeong, 17084 Yongin-si, Gyeonggi-do (KR); Ji, Taeho, 17084 Yongin-si, Gyeonggi-do (KR); Jeon, Duseong, 17084 Yongin-si, Gyeonggi-do (KR); Choi, Hyunho, 17084 Yongin-si, Gyeonggi-do (KR)
(74) Representative: Meissner Bolte Partnerschaft mbB

(57) **Abstract**

A secondary battery (100) includes an electrode assembly (10), a case (110) accommodating the electrode assembly (10), a safety vent (150) formed on a surface of the case (110) and includes a notch (152), and a coating layer (160) disposed on the surface of the case (110) on which the safety vent (150) is formed. The case (110) may include a first surface (210) being open and a second surface (220) being open and opposite to the first surface (210).

## Description

### BACKGROUND

### 1. Field

The present invention relates to a secondary battery and a secondary battery pack including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Since various flammable materials are incorporated in a secondary battery, there is a risk of heat generation or explosion due to over-charging, over-current, or other physical external impacts. For example, heat may be generated while charging or discharging of the secondary battery proceeds. When the heat generation continues, thermal runaway of the secondary battery may occur and may cause a fire in a device or system in which the secondary battery is installed.

The above information disclosed in this background section is for enhancement of understanding of the background of the present invention, and therefore, it may contain information that does not constitute related (or prior) art.

### SUMMARY

The present invention concerns a secondary battery, including an electrode assembly, a case accommodating the electrode assembly, a safety vent on a surface of the case, the safety vent including a notch, and a coating layer on the surface of the case with the safety vent.

The case may include a first surface being open, a second surface being open and opposite to the first surface, a first long-side wall portion and a second long-side wall portion, the first long-side wall portion and the second long-side wall facing each other, the first long-side wall portion and the second long-side wall portion being spaced apart from each other, and a first short-side wall portion and a second short-side wall portion, the first short-side wall portion and the second short-side wall portion facing each other, the first short-side wall portion and the second short-side wall portion being spaced apart from each other and having a smaller area than the first long-side wall portion and the second long-side wall portion.

The safety vent and the coating layer may be on the first short-side wall portion.

A lengthwise direction of the coating layer may be parallel to a lengthwise direction of the first short-side wall portion.

The coating layer may include a first coating layer and a second coating layer spaced apart from each other with the safety vent therebetween.

Each of the first coating layer and the second coating layer may be spaced apart from the safety vent in a lengthwise direction of the first short-side wall portion.

A length of the first coating layer in the lengthwise direction of the first short-side wall portion may be equal to a length of the second coating layer in the lengthwise direction of the first short-side wall portion.

The coating layer may include a heat-resistant material.

A thickness of the coating layer may be greater than or equal to 1 mm and less than or equal to 3 mm.

The electrode assembly may include a first electrode plate and a second electrode plate, a first side plate coupled to the first surface, a second side plate coupled to the second surface, a first terminal exposed externally through the first side plate, the first terminal being electrically connected to the first electrode plate, and a second terminal exposed externally through the second side plate, the second terminal being electrically connected to the second electrode plate.

A secondary battery pack includes a plurality of secondary batteries, a first plate on a side of the plurality of secondary batteries, and a second plate on another side of the plurality of secondary batteries, the second plate facing the first plate, wherein each of the plurality of secondary batteries includes an electrode assembly, a case accommodating the electrode assembly, a safety vent on a surface of the case, the safety vent including a notch, and a coating layer on the surface of the case with the safety vent.

The case may include a first surface being open, a second surface being open and opposite to the first surface, a first long-side wall portion and a second long-side wall portion, the first long-side wall portion and the second long-side wall facing each other, the first long-side wall portion and the second long-side wall portion being spaced apart from each other, and a first short-side wall portion and a second short-side wall portion, the first short-side wall portion and the second short-side wall portion facing each other, the first short-side wall portion and the second short-side wall portion being spaced apart from each other and having a smaller area than the first long-side wall portion and the second long-side wall portion.

The safety vent and the coating layer may be on the first short-side wall portion.

A lengthwise direction of the coating layer may be parallel to a lengthwise direction of the first short-side wall portion.

The coating layer may include a first coating layer and a second coating layer spaced apart from each other with the safety vent therebetween.

Each of the first coating layer and the second coating layer may be spaced apart from the safety vent in a lengthwise direction of the first short-side wall portion.

The first plate may be on the first short-side wall portion, and the second plate may be on the second short-side wall portion.

The first plate may include a plurality of vent holes aligned with the safety vents of the plurality of secondary batteries.

The first plate and the second plate may include one of aluminum and stainless use steel.

A thickness of each of the first plate and the second plate may be greater than or equal to 1 mm and less than or equal to 4 mm.

However, aspects and features of the present invention are not limited to those described above, and other aspects and features not mentioned will be clearly understood by a person of ordinary skill in the art from the detailed description, described below.

### BRIEF DESCRIPTION OF DRAWINGS

Features will become apparent to those of ordinary skill in the art by describing in detail exemplary embodiments with reference to the attached drawings, in which:
FIG. 1 is a perspective view illustrating an example of a secondary battery according to an embodiment of the present invention;
FIG. 2 is an exploded perspective view illustrating an example of a secondary battery according to an embodiment of the present invention;
FIG. 3 is a perspective view illustrating an example of a case according to an embodiment of the present invention;
FIG. 4 is a plan view illustrating an example of a secondary battery according to an embodiment of the present invention;
FIG. 5 is a front view illustrating an example of a secondary battery according to an embodiment of the present invention;
FIG. 6 is a perspective view illustrating an example of a secondary battery pack according to an embodiment of the present invention;
FIG. 7 and FIG. 8 are exploded perspective views illustrating an example of a secondary battery pack according to an embodiment of the present invention; and
FIG. 9 is a diagram illustrating a path of flame ejected through a safety vent of a secondary battery according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

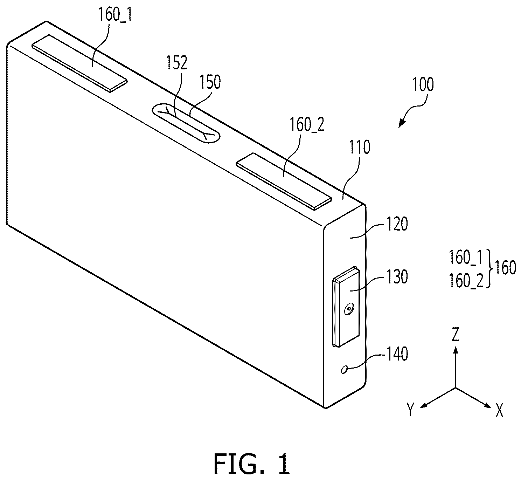

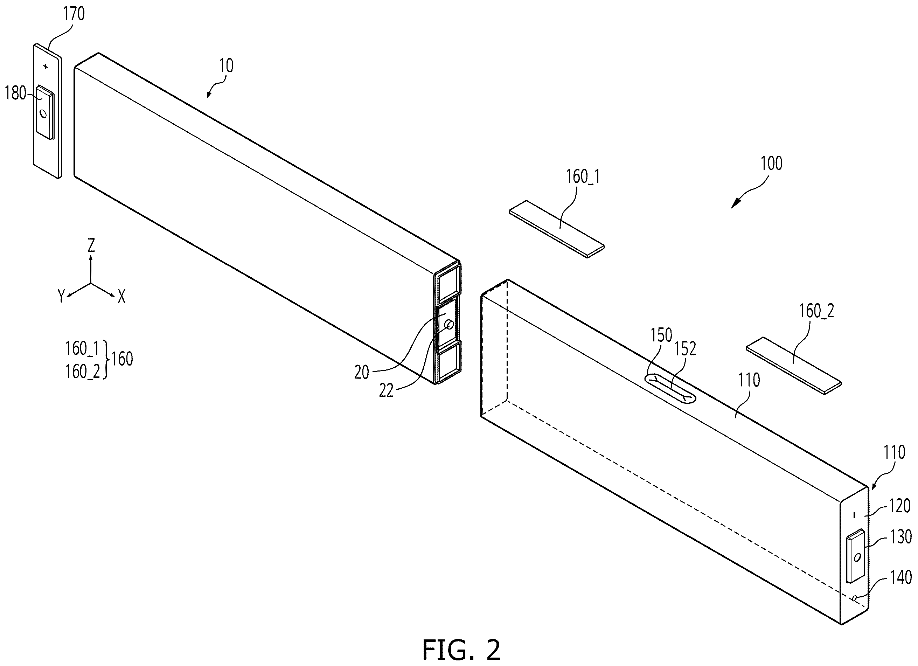

FIG. 1 is a perspective view illustrating an example of a secondary battery according to an embodiment of the present invention, and FIG. 2 is an exploded perspective view illustrating an example of a secondary battery according to an embodiment of the present invention. In the present invention, the secondary battery 100 is described by taking a prismatic secondary battery as an example for convenience of description, but all types of batteries in which a safety vent is installed may be included.

Referring to FIGS. 1 and 2, the secondary battery 100 may include an electrode assembly 10, a case 110 accommodating the electrode assembly 10, a first side plate 120, a first terminal 130, a second side plate 170, and a second terminal 180. The secondary battery 100 may further include a safety vent 150 that is formed on a surface of the case 110 and includes a notch 152. The secondary battery 100 may further include a coating layer 160 that is disposed on the surface of the case 110 on which the safety vent 150 is formed. As illustrated in FIGS. 1 and 2, the first terminal 130 may be disposed on the first side plate 120, and the second terminal 180 may be disposed on the second side plate 170 that faces (or is opposite to) the first side plate 120.

The electrode assembly 10 may be accommodated inside the case 110. The electrode assembly 10 may be formed by winding or stacking a laminate in which a first electrode plate, a separator, and a second electrode plate, each formed as a thin plate or film, are wound or stacked. When the electrode assembly 10 is a wound laminate, a winding axis may be parallel to a lengthwise direction of the case 110. In addition, the electrode assembly 10 may be a stack type rather than a winding type, and the present invention does not limit the shape of the electrode assembly 10. The electrode assembly 10 may also be a Z-stack electrode assembly in which a first electrode plate and a second electrode plate are inserted into both sides of a separator folded in a Z-stack. Further, one or more of the electrode assembly 10 may be stacked such that long sides are adjacent to each other and housed inside the case 110, and the number of the electrode assembly 10 may vary. A first electrode plate of the electrode assembly 10 may serve as a positive electrode, and a second electrode plate may serve as a negative electrode. Alternatively, the first electrode plate may serve as a negative electrode, and the second electrode plate may serve as a positive electrode.

The first electrode plate may be formed by coating a first electrode active material such as graphite or carbon on a first electrode current collector plate formed of a metal foil such as copper, copper alloy, nickel, or nickel alloy, and may include a first electrode tab (or a first uncoated region) that is an area in which the first electrode active material is not coated. The first electrode tab may serve as a current path between the first electrode plate and the first terminal 130. Here, the first terminal 130 denotes a first electrode terminal and is illustrated as a plate in FIG. 1, but may be a rivet. In some examples, the first electrode tab may be formed by cutting the first electrode plate so as to protrude to one side when manufacturing the first electrode plate, or may protrude further to one side beyond the separator without a separate cutting process.

The second electrode plate may be formed by coating a second electrode active material such as a transition metal oxide on a second electrode current collector plate formed of a metal foil such as aluminum or aluminum alloy, and may include a second electrode tab (or a second uncoated region) that is an area in which the second electrode active material is not coated. The second electrode tab may serve as a current path between the second electrode plate and the second terminal 180. Here, the second terminal 180 denotes a second electrode terminal and may be a plate or a rivet. In some examples, the second electrode tab may be formed by cutting the second electrode plate so as to protrude to one side when manufacturing the second electrode plate, or may protrude further to one side beyond the separator without a separate cutting process.

In an embodiment, the first electrode tab may be located on a right-end side surface of the electrode assembly 10, and the second electrode tab may be located on a left-end side surface of the electrode assembly 10. Here, the left and right are for convenience of description based on the secondary battery 100 illustrated in FIGS. 1 and 2. When the secondary battery is rotated left-right or up-down, the positions may be changed.

The electrode assembly 10 may include a sub-plate 20 disposed on one side thereof. The sub-plate 20 may be electrically connected to the first electrode plate (for example, a negative electrode plate) and the second electrode plate (for example, a positive electrode plate) of the electrode assembly 10, respectively. The sub-plate 20 may be electrically connected to the first terminal 130 and the second terminal 180. The sub-plate 20 may also be disposed on the other side of the electrode assembly 10. Specifically, the sub-plate 20 may be disposed on both sides of the electrode assembly 10.

In an embodiment, the sub-plate 20 may be connected to a tab formed at an uncoated portion of the negative electrode. A current collecting structure may be disposed on the sub-plate. The current collecting structure may include a protrusion 22. The protrusion 22 may be in contact with the first terminal 130 and the second terminal 180.

In an embodiment, an electrolyte injection port 140 may be formed on the first side plate 120. An electrolyte may be injected into the case 110 through the electrolyte injection port 140. Although the electrolyte injection port 140 is illustrated as being formed on the first side plate 120 in FIGS. 1 and 2, the placement may vary. After completion of electrolyte injection, the electrolyte injection port 140 may be sealed using a sealing means such as a plug.

In an embodiment, the safety vent 150 may be formed on a surface of the case 110. For example, the safety vent 150 may be formed on an upper surface or a lower surface of the case 110. Here, the upper surface or the lower surface of the case 110 may mean a surface facing upward or downward when the secondary battery 100 is finally installed. The safety vent 150 may prevent explosion of the secondary battery 100 or prevent chain thermal reaction of secondary batteries that are arranged close to the secondary battery.

In an embodiment, the safety vent 150 may be configured to be ruptured when an internal pressure of the secondary battery 100 exceeds a preset/predetermined critical pressure. The critical pressure may be adjusted differently depending on materials and intended use of the secondary battery.

Although the safety vent 150 (singular) is illustrated as being disposed at a center of an upper surface of the case 110 in FIGS. 1 and 2, an arbitrary number of the safety vent 150 may be formed at arbitrary positions on a surface of the case 110. For example, two or more of the safety vent 150 may be disposed on an upper surface of the case 110.

In an embodiment, the coating layer 160 may include a first coating layer 160_1 and a second coating layer 160_2 that are respectively disposed to be spaced apart from each other with the safety vent 150 therebetween. In FIGS. 1 and 2, sizes of the first coating layer 160_1 and the second coating layer 160_2 are illustrated as being identical to each other. However, a size of the first coating layer 160_1 may be different from a size of the second coating layer 160_2.

The coating layer 160 may include a heat-resistant material. The heat-resistant material may maintain physical and/or chemical properties even in a high-temperature environment. For example, the heat-resistant material may include a heat-resistant adhesive such as a silicone-based adhesive, an epoxy adhesive, a polyimide adhesive, or a ceramic adhesive. However, the heat-resistant material may include a ceramic material, a carbon-fiber-reinforced composite material, polyimide plastic, a heat-resistant metal alloy, and the like. Accordingly, the coating layer 160 may remain adhered around the safety vent 150 even in a high-temperature environment and may enhance mechanical strength around the safety vent 150. As a result, the region around the safety vent 150 may not be ruptured, and only the safety vent 150 may be ruptured. That is, during thermal runaway of the secondary battery, gas and/or flame generated inside the secondary battery may be expelled only through a preset path.

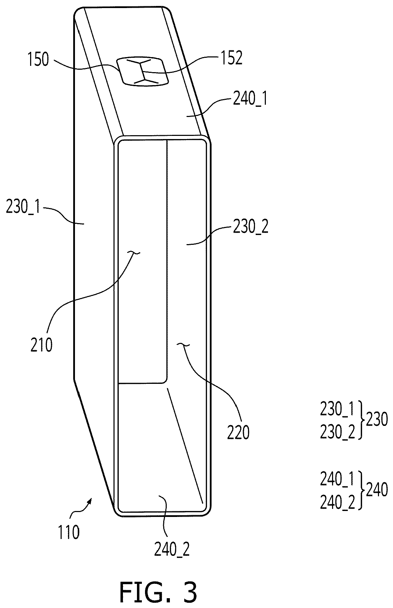

FIG. 3 is a perspective view illustrating an example of a case according to an embodiment of the present invention.

Referring to FIG. 3, the case 110 may include mutually facing long-side wall portions 230, mutually facing short-side wall portions 240, an open first surface 210, and an open second surface 220. The case 110 may be formed of an electrically conductive metal. For example, the case 110 may be formed of aluminum, an aluminum alloy, or nickel-plated steel.

The long-side wall portions 230 may include a first long-side wall portion 230_1 and a second long-side wall portion 230_2. The first long-side wall portion 230_1 and the second long-side wall portion 230_2 may face each other. The first long-side wall portion 230_1 and the second long-side wall portion 230_2 may face each other and be spaced apart from each other in a left-right direction of FIG. 3.

The short-side wall portions 240 may include a first short-side wall portion 240_1 and a second short-side wall portion 240_2. The first short-side wall portion 240_1 and the second short-side wall portion 240_2 may face each other. The first short-side wall portion 240_1 and the second short-side wall portion 240_2 may face each other and be spaced apart from each other in an up-down direction of FIG. 3. Each area of the first short-side wall portion 240_1 and the second short-side wall portion 240_2 may be smaller than each area of the first long-side wall portion 230_1 and the second long-side wall portion 230_2.

Each of the open first surface 210 and the open second surface 220 may denote an opening. The open first surface 210 and the open second surface 220 may be formed on both side surfaces of the case 110. The open first surface 210 may face the open second surface 220.

The open first surface 210 may be sealed by the first side plate 120 (see FIG. 2). The open second surface 220 may be sealed by the second side plate 170 (see FIG. 2). For example, each of the first side plate 120 and the second side plate 170 may be welded to the case 110.

The safety vent 150 may be formed on the first short-side wall portion 240_1 or on the second short-side wall portion 240_2. The safety vent 150 may be a single hole formed through the first short-side wall portion 240_1 or the second short-side wall portion 240_2. The safety vent 150 may include the notch 152 that is ruptured when an internal pressure of the case 110 exceeds a preset critical pressure. The notch 152 may be a part formed by recessing to a certain depth. In other embodiments, the safety vent 150 may include the notch 152 that is ruptured when an internal temperature of the case 110 exceeds a preset critical temperature. The notch 152 may be a part having a thinner thickness than surrounding portions. A shape of the notch 152 viewed from an upper surface of the safety vent 150, but the shape may be other than that illustrated in FIG. 3.

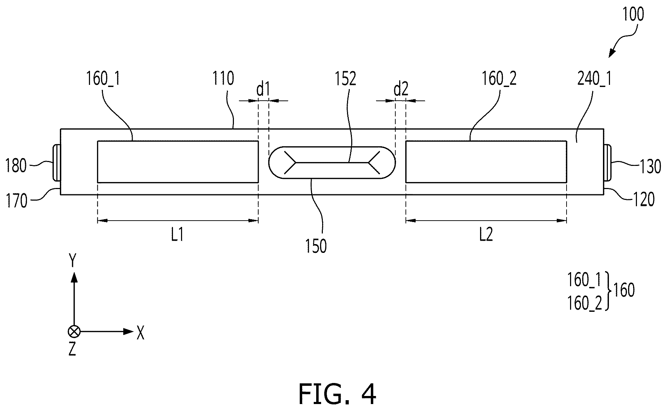

FIG. 4 is a plan view illustrating an example of a secondary battery according to an embodiment of the present invention. FIG. 4 may illustrate an upper surface that looks toward the first short-side wall portion 240_1.

Referring to FIG. 4, the secondary battery 100 may include an electrode assembly, a case 110 accommodating the electrode assembly, a first side plate 120, a first terminal 130, a second side plate 170, and a second terminal 180. The secondary battery 100 may further include a safety vent 150 that is formed on a surface of the case 110 and includes a notch 152. The secondary battery 100 may further include a coating layer 160 that is disposed on the surface of the case 110 on which the safety vent 150 is formed.

In an embodiment, the safety vent 150 may be disposed on the first short-side wall portion 240_1. In an example, the safety vent 150 may be located at a center on the first short-side wall portion 240_1 of the case 110. A shape of the safety vent 150 may be approximately oval, and the safety vent 150 may be elongated along an X-axis direction rather than along a Y-axis direction. That is, a lengthwise direction (X-axis direction) of the safety vent 150 may be parallel to a lengthwise direction (X-axis direction) of the first short-side wall portion 240_1.

In an embodiment, the coating layer 160 may be disposed on the first short-side wall portion 240_1. A shape of the coating layer 160 may be approximately rectangular, and the coating layer 160 may be elongated along the X-axis direction rather than along the Y-axis direction. That is, a lengthwise direction (X-axis direction) of the coating layer 160 may be parallel to the lengthwise direction (X-axis direction) of the first short-side wall portion 240_1.

In an embodiment, the coating layer 160 may include a first coating layer 160_1 and a second coating layer 160_2 that are respectively disposed to be spaced apart from each other with the safety vent 150 therebetween. Although the first coating layer 160_1 and the second coating layer 160_2 are illustrated as rectangles in FIG. 4, each of the first coating layer 160_1 and the second coating layer 160_2 may have another shape such as a circle or an oval.

In an embodiment, each of the first coating layer 160_1 and the second coating layer 160_2 may be disposed to be spaced apart from the safety vent 150 in the lengthwise direction (X-axis direction) of the first short-side wall portion 240_1. As illustrated in FIG. 4, the first coating layer 160_1 may be disposed to be spaced apart from the safety vent 150 by a predetermined distance d1 in the lengthwise direction (X-axis direction) of the first short-side wall portion 240_1. The second coating layer 160_2 may be disposed to be spaced apart from the safety vent 150 by a predetermined distance d2 in the lengthwise direction (X-axis direction) of the first short-side wall portion 240_1. Although the distance d1 by which the first coating layer 160_1 is spaced apart from the safety vent 150 is illustrated as being equal to the distance d2 by which the second coating layer 160_2 is spaced apart from the safety vent 150 in FIG. 4, the distance d1 may be different from the distance d2.

In an embodiment, a length L1 of the first coating layer 160_1 in the lengthwise direction (X-axis direction) of the first short-side wall portion 240_1 may be equal to a length L2 of the second coating layer 160_2 in the lengthwise direction (X-axis direction) of the second short-side wall portion 240_2. However, the length L1 may be different from the length L2.

In an embodiment, the first terminal 130 may be electrically connected to the first electrode plate (for example, a negative electrode plate) of the electrode assembly. The first terminal 130 may be exposed externally through the first side plate 120.

In an embodiment, the second terminal 180 may be electrically connected to the second electrode plate (for example, a positive electrode plate) of the electrode assembly. The second terminal 180 may be exposed externally through the second side plate 170.

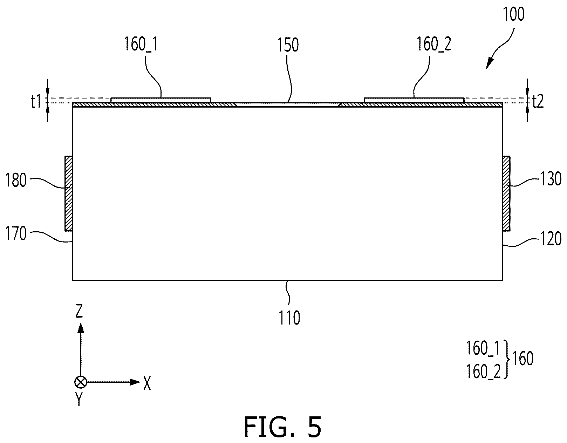

FIG. 5 is a front view illustrating an example of a secondary battery according to an embodiment of the present invention. FIG. 5 may illustrate a front view looking toward a long-side wall portion of the case 110. A description of configurations explained with reference to FIG. 4 is omitted.

Referring to FIG. 5, the coating layer 160 may include a first coating layer 160_1 and a second coating layer 160_2 that are respectively disposed to be spaced apart from each other with the safety vent 150 therebetween.

In an embodiment, a thickness of the coating layer 160 may be greater than or equal to 1 mm and less than or equal to 3 mm. Specifically, each of a thickness t1 of the first coating layer 160_1 and a thickness t2 of the second coating layer 160_2 may be greater than or equal to 1 mm and less than or equal to 3 mm. Although the thickness t1 of the first coating layer 160_1 is illustrated as being equal to the thickness t2 of the second coating layer 160_2 in FIG. 5, the thickness t1 may be different from the thickness t2. Here, the thickness t1 and the thickness t2 of the coating layer 160 may denote a length of the coating layer 160 in a Z-axis direction.

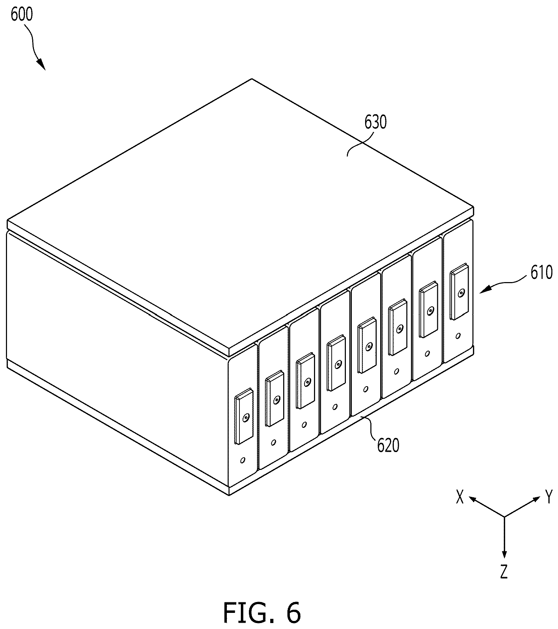

FIG. 6 is a perspective view illustrating an example of a secondary battery pack according to an embodiment of the present invention.

Referring to FIG. 6, a secondary battery pack 600 may include a plurality of secondary batteries 610, a first plate 620, and a second plate 630. In the present invention, the secondary battery pack may denote a secondary battery module.

The plurality of secondary batteries 610 may be arranged in an X-axis direction. Although the secondary battery pack 600 is illustrated as including eight of the plurality of secondary batteries 610 in FIG. 6, the secondary battery pack 600 may include a single secondary battery or nine or more secondary batteries. The plurality of secondary batteries 610 may be arranged in the X-axis direction such that broad (e.g., long) surfaces face each other. In addition, the plurality of secondary batteries 610 may be connected in series or in parallel to each other.

The first plate 620 may be disposed on one side of the plurality of secondary batteries 610. The first plate 620 may have a shape extending in a direction in which the plurality of secondary batteries 610 are arranged. For example, when the plurality of secondary batteries 610 are arranged in the X-axis direction, the first plate 620 may have a shape extending in the X-axis direction. However, a shape of the first plate 620 may have various shapes.

The second plate 630 may be disposed on another side of the plurality of secondary batteries 610 and may face the first plate 620. The second plate 630 may have a shape extending in a direction in which the plurality of secondary batteries 610 are arranged. For example, when the plurality of secondary batteries 610 are arranged in the X-axis direction, the second plate 630 may have a shape extending in the X-axis direction. However, a shape of the second plate 630 is not limited thereto, and the second plate 630 may have various shapes.

Each of the plurality of secondary batteries 610 may be a lithium battery cell, a sodium battery cell, or the like. However, the plurality of secondary batteries 610 may be any battery that can repeatedly provide electric power through charging and discharging. According to an embodiment, when the plurality of secondary batteries 610 are lithium battery cells, they may be used in an electric vehicle (EV) because life characteristics and high-rate characteristics are excellent. For example, they may be used in a hybrid vehicle such as a plug-in hybrid electric vehicle (PHEV). In addition, the lithium battery cells may be used in fields requiring storage of a large amount of power. For example, they may be used in electric bicycles, power tools, energy storage systems (ESS), and the like.

The secondary battery pack 600 may further include side plates and end plates. The side plates and the end plates may accommodate the plurality of secondary batteries 610. In an embodiment, a pair of side plates may be disposed on both side surfaces of the plurality of secondary batteries 610. A pair of end plates may be coupled orthogonally to the side plates and may be disposed to support outermost surfaces in one direction (for example, an arrangement direction of the plurality of secondary batteries 610) of the plurality of secondary batteries 610.

The side plates may be disposed at both ends in a Y-axis direction and may be connected to the end plates. That is, the side plates may accommodate and support the plurality of secondary batteries 610 at both sides in a width direction (Y-axis direction) of the secondary battery pack 600. The side plates may be formed of a metal (for example, stainless steel) so as to reinforce mechanical strength of the secondary battery pack 600 at both ends in the Y-axis direction.

The end plates may be connected to the side plates by welding. The end plates may be formed of a metal (for example, stainless steel) so as to reinforce mechanical strength of the secondary battery pack 600 at an outermost region in the X-axis direction.

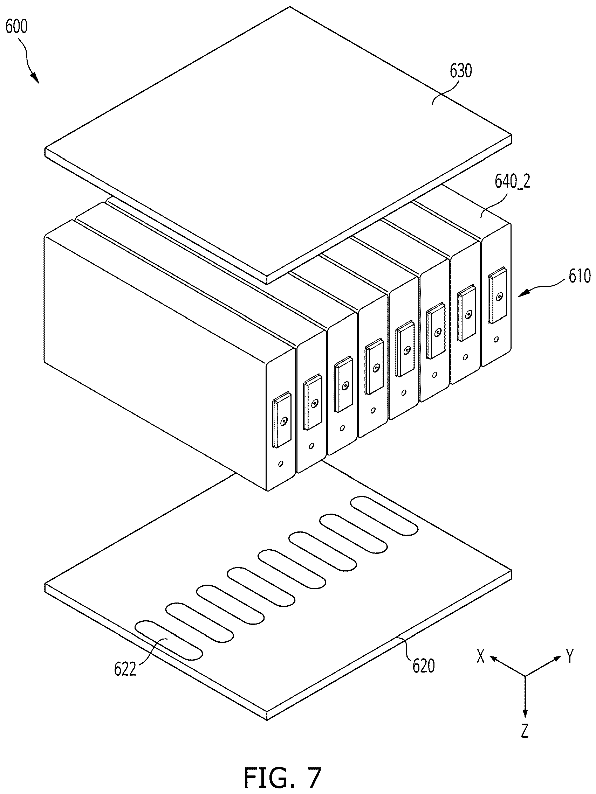

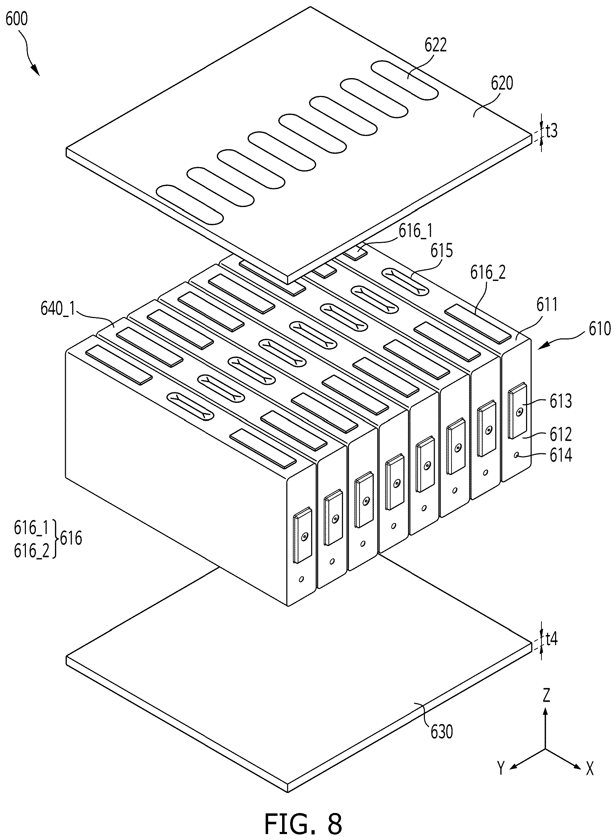

FIGS. 7 and 8 are exploded perspective views illustrating an example of a secondary battery pack according to an embodiment of the present invention. FIG. 7 may illustrate an exploded perspective view of the secondary battery pack 600 in which a second short-side wall portion 640_2 faces upward. FIG. 8 may illustrate an exploded perspective view of the secondary battery pack 600 in which a first short-side wall portion 640_1 faces upward for convenience of description.

Referring to FIGS. 7 and 8, the secondary battery pack 600 may include the plurality of secondary batteries 610, the first plate 620, and the second plate 630. Each of the plurality of secondary batteries 610 may include an electrode assembly, a case 611 accommodating the electrode assembly, a first side plate 612, a first terminal 613, a second side plate, and a second terminal. Each of the plurality of secondary batteries 610 may further include a safety vent 615 that is formed on a surface of the case 611. Each of the plurality of secondary batteries 610 may further include a coating layer 616 that is disposed on the surface of the case 611 on which the safety vent 615 is formed.

In an embodiment, the safety vent 615 may be disposed on the first short-side wall portion 640_1. The safety vent 615 may be located at a center on the first short-side wall portion 640_1 of the case 611. A shape of the safety vent 615 may be approximately oval, and the safety vent 615 may be elongated along an X-axis direction rather than along a Y-axis direction. That is, a lengthwise direction (X-axis direction) of the safety vent 615 may be parallel to a lengthwise direction (X-axis direction) of the first short-side wall portion 640_1.

In an embodiment, the coating layer 616 may be disposed on the first short-side wall portion 640_1. A shape of the coating layer 616 may be approximately rectangular, and the coating layer 616 may be elongated along the X-axis direction rather than along the Y-axis direction. That is, a lengthwise direction (X-axis direction) of the coating layer 616 may be parallel to the lengthwise direction (X-axis direction) of the first short-side wall portion 640_1.

In an embodiment, the coating layer 616 may include a first coating layer 616_1 and a second coating layer 616_2 that are respectively disposed to be spaced apart from each other with the safety vent 615 therebetween. Although each of the first coating layer 616_1 and the second coating layer 616_2 is illustrated as a rectangle in FIG. 8, each of the first coating layer 616_1 and the second coating layer 616_2 may have another shape such as a circle or an oval.

In an embodiment, each of the first coating layer 616_1 and the second coating layer 616_2 may be disposed to be spaced apart from the safety vent 615 in the lengthwise direction (X-axis direction) of the first short-side wall portion 640_1.

In an embodiment, the first terminal 613 may be electrically connected to the first electrode plate (for example, a negative electrode plate) of the electrode assembly. The first terminal 613 may be exposed externally through the first side plate 612.

In an embodiment, the second terminal may be electrically connected to the second electrode plate (for example, a positive electrode plate) of the electrode assembly. The second terminal may be exposed externally through the second side plate.

The first plate 620 may be disposed on the first short-side wall portions 640_1 of the plurality of secondary batteries 610. That is, the first plate 620 may be disposed under the plurality of secondary batteries 610. The first plate 620 may include a plurality of vent holes 622 formed corresponding to the safety vents 615 of the respective of the plurality of secondary batteries 610.

In an embodiment, the first plate 620 may have a plate shape and may be made of a metal material. For example, the first plate 620 may include one of aluminum (Al) and stainless use steel (SUS). A thickness t3 of the first plate 620 may be greater than or equal to 1 mm and less than or equal to 4 mm.

In an embodiment, the plurality of vent holes 622 may be formed corresponding to the safety vents 615 of the respective of the plurality of secondary batteries 610 (e.g., the vent holes 622 may be aligned with the safety vents 615). Here, each of the plurality of vent holes 622 may be larger in size than each safety vent 615 of the respective of the plurality of secondary batteries 610. Although the plurality of vent holes 622 are illustrated as being formed in the first plate 620 corresponding to the safety vents 615 of the respective of the plurality of secondary batteries 610 in FIG. 8, one or more vent holes 622 may be formed at positions corresponding to at least some of the safety vents 615 of the plurality of secondary batteries 610 on the first plate 620.

The second plate 630 may be disposed on the second short-side wall portions 640_2 of the respective of the plurality of secondary batteries 610. That is, the second plate 630 may be disposed above the plurality of secondary batteries 610.

In an embodiment, the second plate 630 may have a plate shape and may be made of a metal material. For example, the second plate 630 may include one of aluminum (Al) and stainless use steel (SUS). A thickness t4 of the second plate 630 may be greater than or equal to 1 mm and less than or equal to 4 mm.

By the above-described configuration, mechanical strength of regions of the first short-side wall portions 640_1 of the plurality of secondary batteries 610 except for the safety vents 615 may be improved, and mechanical strength of the second short-side wall portions 640_2 may be improved. That is, even in a high-temperature environment, the coating layer 616 may remain adhered around the safety vent 615 and may enhance mechanical strength around the safety vent 615. As a result, regions around the safety vent 615 may not be ruptured, and only the safety vent 615 may be ruptured. Therefore, during thermal runaway of the secondary batteries, gas and/or flame generated inside the secondary batteries may be expelled only through the safety vents 615 and may be discharged through the plurality of vent holes 622.

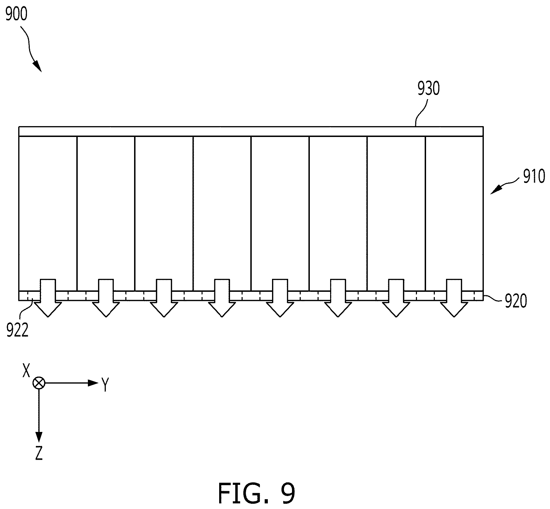

FIG. 9 is a diagram illustrating a path of flame ejected through a safety vent of a secondary battery according to an embodiment of the present invention. FIG. 9 may illustrate a side sectional view of the secondary battery pack 600 of FIG. 6.

Referring to FIG. 9, a secondary battery pack 900 may include a first plate 920 disposed under the plurality of secondary batteries 910 and a second plate 930 disposed above the plurality of secondary batteries 910.

Each of the plurality of secondary batteries 910 may include a safety vent formed on a lower portion (e.g., in the orientation shown in FIG. 9). The first plate 920 may include a plurality of vent holes 922. The plurality of vent holes 922 may be formed corresponding to the safety vents of the respective secondary batteries 910. Each of the plurality of vent holes 922 may be larger in size than each safety vent of the respective secondary batteries 910.

Accordingly, when an internal pressure of the plurality of secondary batteries 910 increases due to thermal runaway or the like, the safety vents may be ruptured, and flame generated from the plurality of secondary batteries 910 may be ejected downward from the plurality of secondary batteries 910. Thereafter, the downwardly ejected flame may be discharged through the plurality of vent holes 922 of the first plate 920. Thus, thermal runaway induced in some secondary batteries constituting the secondary battery pack 900 may be prevented from being sequentially transferred to other secondary batteries.

A secondary battery may include a safety vent to prevent heat generation and/or explosion due to thermal runaway. The safety vent may be ruptured by internal gas pressure of the secondary battery, thereby releasing internal gas of the secondary battery. The safety vent may discharge gas generated during a thermal runaway process along a preset path so as to reduce damage to the surroundings. However, when thermal runaway occurs, a region around the safety vent of the secondary battery may be ruptured, causing damage to nearby components.

In a battery module or battery pack that includes a plurality of such secondary batteries, external impact or abnormal operation of an internal battery cell may cause thermal runaway inside the battery module/pack. When thermal runaway occurs inside the battery module/pack, thermal runaway induced in some battery cells may be sequentially transferred to other battery cells, resulting in serious problems. Therefore, when thermal runaway occurs in some battery cells, it is necessary to block the influence on other battery cells.

According to some embodiments of the present invention, it is possible to provide a secondary battery having enhanced safety and a secondary battery pack including the secondary battery.

According to some embodiments of the present invention, during thermal runaway of the secondary battery, a coating layer may remain adhered around the safety vent even in a high-temperature environment, thereby improving mechanical strength around the safety vent and consequently enhancing safety of the secondary battery and a secondary battery pack including the secondary battery.

According to some embodiments of the present invention, when the mechanical strength around the safety vent is improved, the region around the safety vent may not be ruptured during thermal runaway of the secondary battery, and only the safety vent may be ruptured, whereby gas and/or flame generated inside the secondary battery may be discharged only through the safety vent.

According to some embodiments of the present invention, gas and/or flame generated inside the secondary battery may be discharged through the plurality of vent holes so that thermal runaway induced in some secondary batteries constituting the secondary battery pack may be prevented from being sequentially transferred to other secondary batteries.

Although the present invention has been described above with respect to embodiments thereof, the present invention is not limited thereto. Various modifications and variations can be made thereto by those skilled in the art within the spirit of the present invention and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A secondary battery (100, 610, 910), comprising:
an electrode assembly (10);
a case (110) accommodating the electrode assembly (10);
a safety vent (150, 615) on a surface of the case (110), the safety vent (150, 615) including a notch (152); and
a coating layer (160) on the surface of the case (110) with the safety vent (150, 615).

2. The secondary battery (100, 610, 910) according to claim **1,** wherein the case (110) comprises:
a first surface (210) being open;
a second surface (220) being open and opposite to the first surface (210);
a first long-side wall portion (230_1) and a second long-side wall portion (230_2), the first long-side wall portion (230_1) and the second long-side wall portion (230_2) facing each other, the first long-side wall portion (230_1) and the second long-side wall portion (230_2) being spaced apart from each other; and
a first short-side wall portion (240_1) and a second short-side wall portion (240_2), the first short-side wall portion (240_1) and the second short-side wall portion (240_2) facing each other, the first short-side wall portion (240_1) and the second short-side wall portion (240_2) being spaced apart from each other and having a smaller area than the first long-side wall portion (230_1) and the second long-side wall portion (230_2).

3. The secondary battery (100, 610, 910) according to claim 2, wherein the safety vent (150, 615) and the coating layer (160) are on the first short-side wall portion (240_1).

4. The secondary battery (100, 610, 910) according to claims 2 or 3, wherein a lengthwise direction of the coating layer (160) is parallel to a lengthwise direction of the first short-side wall portion (240_1).

5. The secondary battery (100, 610, 910) according to claims 2 or 3, wherein the coating layer (160) comprises a first coating layer (160_1, 616_1) and a second coating layer (160_2, 616_2) spaced apart from each other with the safety vent (150, 615) therebetween.

6. The secondary battery (100, 610, 910) according to any of claims 2, 3 or 5, wherein each of the first coating layer (160_1, 616_1) and the second coating layer (160_2, 616_2) is spaced apart from the safety vent (150, 615) in a lengthwise direction of the first short-side wall portion (240_1).

7. The secondary battery (100, 610, 910) according to any of claims 2, 3 or 5, wherein a length (L1) of the first coating layer (160_1, 616_1) in the lengthwise direction of the first short-side wall portion (240_1) is equal to a length (L2) of the second coating layer (160_2, 616_2) in the lengthwise direction of the first short-side wall portion (240_1).

8. The secondary battery (100, 610, 910) according to any of claims 1 to 7, wherein the coating layer (160) comprises a heat-resistant material.

9. The secondary battery (100, 610, 910) according to any of claims 1 to 8, wherein a thickness (t1, t2) of the coating layer (160) is greater than or equal to 1 mm and less than or equal to 3 mm.

10. The secondary battery (100, 610, 910) according to any of claims 2 to 9, wherein the electrode assembly (10) comprises:
a first electrode plate and a second electrode plate,
a first side plate (120, 612) coupled to the first surface (210),
a second side plate (170) coupled to the second surface (220),
a first terminal (130, 613) exposed externally through the first side plate (120, 612), the first terminal (130, 613) being electrically connected to the first electrode plate, and
a second terminal (180) exposed externally through the second side plate (170), the second terminal (180) being electrically connected to the second electrode plate.

11. A secondary battery pack (600, 900), comprising:
a plurality of secondary batteries (100, 610, 910);
a first plate (620, 920) on a side of the plurality of secondary batteries (100, 610, 910); and
a second plate (630, 930) on another side of the plurality of secondary batteries (100, 610, 910), the second plate (630, 930) facing the first plate (620, 920), wherein each of the plurality of secondary batteries (100, 610, 910) comprises:
an electrode assembly (10);
a case (110) accommodating the electrode assembly (10);
a safety vent (150, 615) on a surface of the case (110), the safety vent (150, 615) including a notch (152); and
a coating layer (160) on the surface of the case (110) with the safety vent (150, 615).

12. The secondary battery pack (600, 900) according to claim **11,** wherein the case (110) comprises:
a first surface (210) being open;
a second surface (220) being open and opposite to the first surface (210);
a first long-side wall portion (230_1) and a second long-side wall portion (230_2), the first long-side wall portion (230_1) and the second long-side wall portion (230_2) facing each other, the first long-side wall portion (230_1) and the second long-side wall portion (230_2) being spaced apart from each other; and
a first short-side wall portion (240_1) and a second short-side wall portion (240_2), the first short-side wall portion (240_1) and the second short-side wall portion (240_2) facing each other, the first short-side wall portion (240_1) and the second short-side wall portion (240_2) being spaced apart from each other and having a smaller area than the first long-side wall portion (230_1) and the second long-side wall portion (230_2).

13. The secondary battery pack (600, 900) according to claim 12, wherein the safety vent (150, 615) and the coating layer (160) are on the first short-side wall portion (240_1).

14. The secondary battery pack (600, 900) according to claims 12 or 13, wherein a lengthwise direction of the coating layer (160) is parallel to a lengthwise direction of the first short-side wall portion (240_1).

15. The secondary battery pack (600, 900) according to claims 12 or 13, wherein the coating layer (160) comprises a first coating layer (160_1, 616_1) and a second coating layer (160_2, 616_2) spaced apart from each other with the safety vent (150, 615) therebetween.
